# EUROPEAN PATENT SPECIFICATION

(11) **EP 4 542 983 B1**
(45) Date of publication and mention of the grant of the patent: **24.06.2026**
(21) Application number: 24201959.4
(22) Date of filing: 23.09.2024
(51) Int. Cl.: H04N 7/18, G06V 20/52, G08B 13/196, H04N 23/695

(54) **METHODS AND SYSTEMS FOR MONITORING ACTIVITIES IN A MONITORED SPACE**
VERFAHREN UND SYSTEME ZUR ÜBERWACHUNG VON AKTIVITÄTEN IN EINEM ÜBERWACHTEN RAUM
PROCÉDÉS ET SYSTÈMES DE SURVEILLANCE D'ACTIVITÉS DANS UN ESPACE SURVEILLÉ

(30) Priority: 16.10.2023 US 202318487658
(43) Date of publication of application: 23.04.2025
(73) Proprietor: Honeywell International Inc., Charlotte, NC 28202 (US)
(72) Inventor: DHAYALAN, Sivasanthanam, Charlotte, 28202 (US); A, Ramkumar, Charlotte, 28202 (US); JOSEPH, Jeslin Paul, Charlotte, 28202 (US); KANNAN, Prabhu, Charlotte, 28202 (US)
(74) Representative: Haseltine Lake Kempner LLP

(56) References cited:
- KR-A- 20230 020 184
- US-A1- 2012 038 776
- US-A1- 2012 274 776
- US-A1- 2019 215 424
- US-A1- 2021 366 256

## Description

### TECHNICAL FIELD

The present disclosure relates generally to video monitoring systems and more particularly to using video monitoring systems to monitor activities in a monitored space.

### BACKGROUND

A number of video monitoring systems are in use, employing large number of video cameras. Video monitoring systems are configured to provide video coverage of many areas of interest within a monitored space. Many times, a particular space may be covered by more than one video camera in order to provide more complete coverage. Every video camera has a Field of View (FOV), and the FOV of each video camera may be taken into account when designing the video monitoring system. Over time, the FOV of a video camera may change due to poor adjustments, wear, and the like. Sometimes, the FOV of a video camera may be partially or completely blocked due to accidental events such as someone moving a large house plant, for example, or stacking several boxes in the wrong place. Sometimes, the FOV of a video camera may be partially or even completely blocked for more nefarious purposes, such as someone attempting to avoid detection by a particular video camera by intentionally placing something that blocks at least part of the FOV of that camera. What would be desirable are systems and methods for automatically detecting when a FOV of a video camera is blocked or partially blocked and making appropriate adjustments to other video cameras to account for the blockage.

US 2019/215424 A1 discloses a monitoring system for a shop with cameras monitoring shelves. An occluding object is identified and recognized. The system may further analyze input from another camera that monitors the disappearing shelf and/or display from a different angle to determine that the shelf and/ or display was not physically removed.

US 2012/274776 A1discloses a method to detect tampering of a camera. When a first camera detects an obstruction in its field of view, it controls another PTZ camera such that its FOV overlaps the FOV of the first camera. By comparing the image captured by the second camera with images from the first camera the method can determine whether the obstruction is the result of an occlusion by an object or if it is due to tampering of the first camera.

### SUMMARY

The present invention is defined by the independent claims to which reference should now be made. Advantageous embodiments are set out in the dependent claims.

The present disclosure relates generally to video monitoring systems and more particularly to using video monitoring systems to monitor activities in a monitored space. An example may be found in a method for monitoring activities in a monitored space using a plurality of Pan/Tilt/Zoom (PTZ) video cameras each having a Field Of View (FOV). The illustrative method includes receiving a first video stream from a first one of the plurality of PTZ video cameras, identifying one or more objects in the FOV of the first one of the plurality of PTZ video cameras, and classifying each of the one or more identified objects into one or more of a plurality of object classes. The method includes determining when one or more objects, classified in a first object class of the plurality of object classes, obstructs a designated region of the monitored space in the FOV of the first one of the plurality of PTZ video cameras for at least a threshold period of time, and when so, causing a second one of the plurality of Pan/Tilt/Zoom (PTZ) video cameras to adjust a pan, tilt and/or zoom settings of the second one of the plurality of Pan/Tilt/Zoom (PTZ) video cameras to capture the designated region of the monitored space in the FOV of the second one of the plurality of Pan/Tilt/Zoom (PTZ) video cameras.

Another example may be found in a video monitoring system for monitoring activities in a monitored space. The video monitoring system includes a plurality of Pan/Tilt/Zoom (PTZ) video cameras each having a Field Of View (FOV). Each of the plurality of Pan/Tilt/Zoom (PTZ) video cameras are operatively coupled via a peer-to-peer network. A first one of the plurality of PTZ video cameras is configured to receive a first video stream from the first one of the plurality of PTZ video cameras, identify one or more objects in the FOV of the first one of the plurality of PTZ video cameras, classify each of the one or more identified objects into one or more of a plurality of object classes, and determine when one or more objects, classified in a first object class of the plurality of object classes, obstructs a designated region of the monitored space in the FOV of the first one of the plurality of PTZ video cameras for at least a threshold period of time, and when so, send one or more messages to a second one of the plurality of Pan/Tilt/Zoom (PTZ) video cameras via the peer-to-peer network to adjust a pan, tilt and/or zoom settings of the second one of the plurality of Pan/Tilt/Zoom (PTZ) video cameras to capture the designated region of the monitored space in the FOV of the second one of the plurality of Pan/Tilt/Zoom (PTZ) video cameras.

Another example may be found in a non-transitory computer readable medium storing instructions that are executable by one or more processors of a first PTZ video camera. When the instructions are executed, the one or more processors of the first PTZ video camera are caused to receive a video stream from the first PTZ video camera, identify one or more objects in a Field Of View (FOV) of the first PTZ video camera, classify each of the one or more identified objects into one or more of a plurality of object classes, and determine when one or more objects, classified in a first object class of the plurality of object classes, obstructs a designated region of a monitored space in the FOV of the first PTZ video camera for at least a threshold period of time, and when so, send one or more messages to a second PTZ video camera via a peer-to-peer network connection to adjust a pan, tilt and/or zoom settings of the second PTZ video camera to capture the designated region of the monitored space in the FOV of the second PTZ video camera.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative video monitoring system;
Figures 2A and 2B are flow diagrams that together show an illustrative method for monitoring activities in a monitored space;
Figure 3 is a flow diagram showing an illustrative series of steps that the processors of a PTZ camera carry out upon execution of executable instructions;
Figure 4 is a schematic illustration showing how one or more PTZ cameras may compensate for a partially or completely blocked FOV of a PTZ camera; and
Figure 5 is a flow diagram showing an illustrative method.

While the disclosure is amenable to various modifications and alternative forms, specifics thereof have been shown by way of example in the drawings and will be described in detail. It should be understood, however, that the intention is not to limit the disclosure to the particular examples described.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

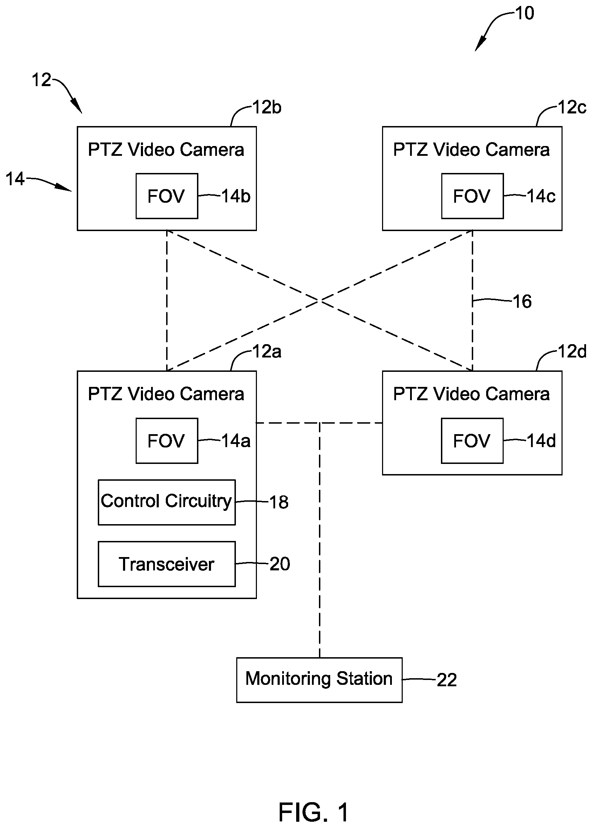

Figure 1 is a schematic block diagram showing an illustrative video monitoring system 10 for monitoring activities in a monitored space. The illustrative video monitoring system 10 includes a plurality of a plurality of Pan/Tilt/Zoom (PTZ) video cameras 12, individually labeled as 12a, 12b, 12c and 12d. While a total of four PTZ video cameras 12 are shown, this is merely illustrative, as the video monitoring system 10 may include any number of PTZ video cameras 12, and in some instances may include considerably more than four PTZ video cameras 12. Each of the PTZ video cameras 12 have a Field of View (FOV) 14, individually labeled as 14a, 14b, 14c and 14d. Each of the PTZ video cameras 12 is configured to be able to adjust any of its Pan settings, Tilt settings and its Zoom settings in order to change its FOV 14. In some cases, the PTZ video cameras 12 are operatively coupled to a Networked Video Recorder (NVR) via a wired and/or wireless network. In some cases, the PTZ video cameras 12 are operatively coupled via a peer-to-peer network 16 that allows any of the PTZ video cameras 12 to communicate with other PTZ video cameras 12. In some instances, the peer-to-peer network 16 may be a mesh network, for example. In some cases, a Networked Video Recorder (NVR) may be operatively coupled to the peer-to-peer network. In some instances, the PTZ video cameras 12 may be operatively coupled with a monitoring station 22.

In some instances, each of the PTZ video cameras 12 may include control circuitry 18 that controls operation of the PTZ video camera 12, although for clarity only the PTZ video camera 12a is shown as including the control circuitry 18. In some instances, the control circuitry 18 may be configured to execute video analytics algorithms in order to analyze the video streams produced by the corresponding PTZ video camera 12. In some instances, each of the PTZ video cameras 12 may include a transceiver 20, or may include a separate transmitter and/or a separate receiver. The transceiver 20 allows the PTZ video camera 12 to communicate with other PTZ video cameras 12, such as over the peer-to-peer network 16. It will be appreciated that each PTZ video camera 12 may include additional components not shown, including a power supply, a memory, a gyroscope and/or accelerometer for identifying the current PTZ settings, a visual alarm and/or an audible alarm.

In some instances, each of the plurality of PTZ video cameras 12 are configured to receive a video stream from the corresponding PTZ video camera 12 and to identify one or more objects in the FOV 14 of the PTZ video camera 12. Each PTZ video camera 12 is configured to classify each of the one or more identified objects into one or more of a plurality of object classes, and to determine when one or more objects, classified in a first object class of the plurality of object classes, obstructs a designated region of the monitored space in the FOV 14 of the PTZ video camera 12 for at least a threshold period of time, and when so, send one or more messages to a second PTZ video camera 12 via the peer-to-peer network 16 to adjust a pan, tilt and/or zoom settings of the second PTZ video camera 12 to capture the designated region of the monitored space in the FOV 14 of the second PTZ video camera 12.

In some instances, the designated region of the monitored space may be a predefined critical region that is defined during commissioning of the video monitoring system 10. In some instances, identifying one or more objects in the FOV 14 of a PTZ video camera 12 includes comparing one or more frames of the first video stream with a background reference frame associated with the that PTZ video camera 12. In some instances, classifying each of the one or more identified objects into one or more of a plurality of object classes includes classifying each of the one or more identified objects into one or more of a plurality of object classes using artificial intelligence (AI). Each of the plurality of object classes may include one or more of an object size class and an object type class.

In some instances, a PTZ video camera 12 may see a particular object at a particular location when at a particular pan, tilt and zoom setting. If the PTZ video camera 12 changes its pan, tilt or zoom, the location of the particular object will similarly change. As an example, say that a reference point one of a PTZ camera 1 lies at (100,100) pixels at pan=0 and tilt=0. If camera 1 changes its position to pan=50 and tilt=0, that same reference point may now be at a new translated location, such as (500,100). As will be appreciated, a number of common reference points may be identified in the FOV of each of the PTZ video cameras 12 during commissioning of the video monitoring system 10, sometimes along with corresponding PTZ settings. These common reference points may be used to map a physical location captured in the FOV of a first one of the PTZ cameras 12 to the same physical location in the FOV of a second one of the PTZ cameras 12. If two PTX cameras do not share any common reference points, the FOV of the two cameras do not overlap.

When an object is identified as blocking a particular location in the FOV of a first PTZ camera, coordinates of the blocked location in the FOV of the first PTZ camera are shared with neighboring PTZ video cameras 12 (sometimes via a peer-to-peer network). Using the previously established common reference points, a neighboring second PTZ video camera 12 maps the coordinates of the blocked location to corresponding coordinates in the FOV of the neighboring second PTZ camera. The neighboring second PTZ camera 12 then adjusts the pan, tilt and/or zoom settings of the neighboring second PTZ camera 12 to capture the blocked location. In some cases, two or more of the neighboring PTZ cameras 12 may map the coordinates of the blocked location to corresponding coordinates in the FOV of the corresponding neighboring PTZ camera, and each of the neighboring PTZ cameras 12 may adjusts their pan, tilt and/or zoom settings to capture the blocked location. In some cases, the two or more neighboring PTZ cameras 12 may coordinate the adjustments to their pan, tilt and/or zoom settings to capture the blocked location while minimizing the impact to the overall coverage of the monitored space by the video monitoring system 10.

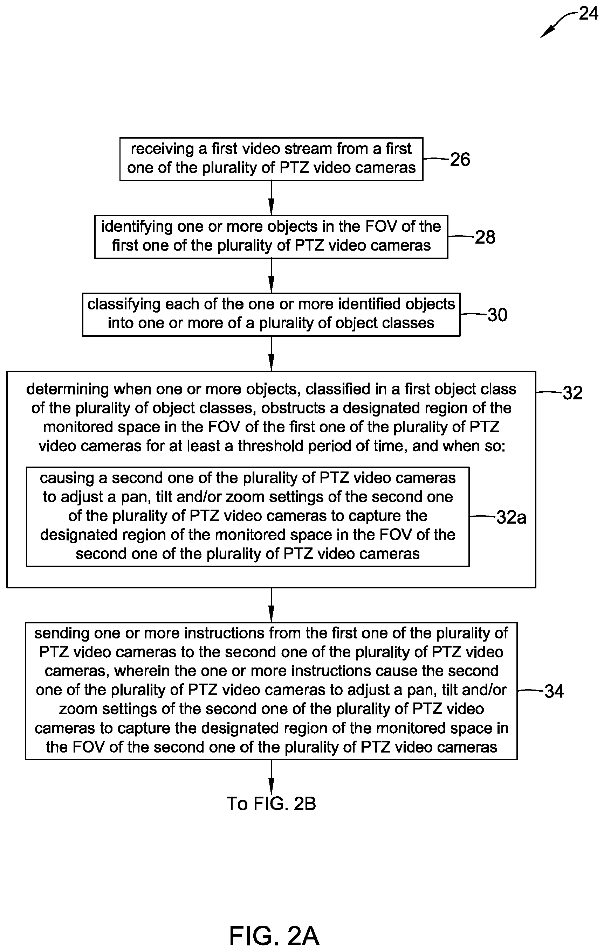

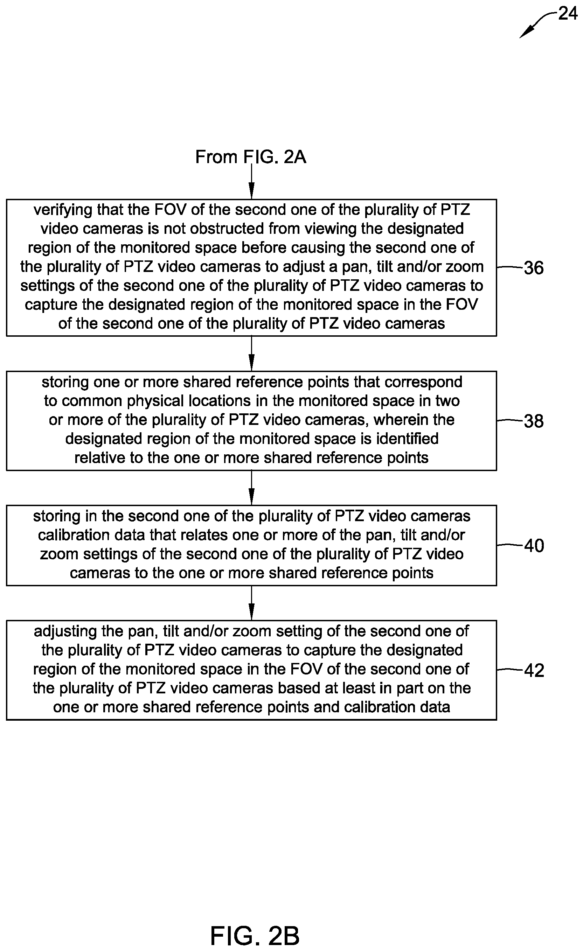

Figures 2A and 2B are flow diagrams that together show an illustrative method 24 for monitoring activities in a monitored space using a plurality of PTZ video cameras (such as the PTZ video cameras 12) each having a Field Of View (FOV). The illustrative method 24 includes receiving a first video stream from a first one of the plurality of PTZ video cameras, as indicated at block 26. One or more objects are identified in the FOV of the first one of the plurality of PTZ video cameras, as indicated at block 28. In some instances, identifying one or more objects in the FOV of the first one of the plurality of PTZ video cameras includes comparing one or more frames of the first video stream with a background reference frame associated with the first one of the plurality of PTZ video cameras. Each of the one or more identified objects are classified into one or more of a plurality of object classes, as indicated at block 30. In some instances, classifying each of the one or more identified objects into one or more of a plurality of object classes may include classifying each of the one or more identified objects into one or more of a plurality of object classes using artificial intelligence (AI). As an example, the plurality of object classes may include one or more of an object size class and an object type class. In some cases, the objects may be classified as a human, a vehicle, a pet, a bag, a box, a balloon, a hand and/or any other object type.

A determination is made as to when one or more objects, classified in a first object class of the plurality of object classes, obstructs a designated region of the monitored space in the FOV of the first one of the plurality of PTZ video cameras for at least a threshold period of time, as indicated at block 32. When this occurs, the method 24 includes causing a second one of the plurality of PTZ video cameras to adjust the pan, tilt and/or zoom settings of the second one of the plurality of PTZ video cameras to capture the designated region of the monitored space in the FOV of the second one of the plurality of PTZ video cameras, as indicated at block 32a. As an example, the designated region of the monitored space may be a predefined critical region defined during commissioning (e.g. a casino table).

In some instances, the method 24 may include sending one or more instructions from the first one of the plurality of PTZ video cameras to the second one of the plurality of PTZ video cameras, wherein the one or more instructions cause the second one of the plurality of PTZ video cameras to adjust a pan, tilt and/or zoom settings of the second one of the plurality of PTZ video cameras to capture the designated region of the monitored space in the FOV of the second one of the plurality of PTZ video cameras, as indicated at block 34. As an example, the one or more instructions may be sent over a peer-to-peer network. In some instances, the first one of the plurality of PTZ video cameras may send the current pan, tilt and zoom position and IP address of the first one of the plurality of PTZ video cameras, along with object details regarding the object(s) that is obstructing the designated region of the monitored space in the FOV of the first one of the plurality of PTZ video camera. The object details may include, for example, the coordinates of the location of the object, the object classification, the time since the designated region was initially blocked, one or more color(s) of the object, size and/or shape of the object, and/or any other suitable object details.

Continuing on Figure 2B, the method 24 may include verifying that the FOV of the second one of the plurality of PTZ video cameras is not obstructed from viewing the designated region of the monitored space before causing the second one of the plurality of PTZ video cameras to adjust a pan, tilt and/or zoom settings of the second one of the plurality of PTZ video cameras to capture the designated region of the monitored space in the FOV of the second one of the plurality of PTZ video cameras, as indicated at block 36. In some instances, the method 24 may include storing one or more shared reference points that correspond to common physical locations in the monitored space in two or more of the plurality of PTZ video cameras, wherein the designated region of the monitored space is identified relative to the one or more shared reference points, as indicated at block 38. The method 24 may include storing in the second one of the plurality of PTZ video cameras calibration data that relates one or more of the pan, tilt and/or zoom settings of the second one of the plurality of PTZ video cameras to the one or more shared reference points, as indicated at block 40. The method 24 may include adjusting the pan, tilt and/or zoom setting of the second one of the plurality of PTZ video cameras to capture the designated region of the monitored space in the FOV of the second one of the plurality of PTZ video cameras based at least in part on the one or more shared reference points and calibration data, as indicated at block 42.

**In** some instances, the first one of the plurality of PTZ video cameras includes control circuitry that is configured to receive the first video stream from the first one of the plurality of PTZ video cameras, identify one or more objects in the FOV of the first one of the plurality of PTZ video cameras, classify each of the one or more identified objects into one or more of a plurality of object classes, and determine when one or more objects, classified in the first object class of the plurality of object classes, obstructs a designated region of the monitored space in the FOV of the first one of the plurality of PTZ video cameras for at least a threshold period of time. When so determined, the first one of the plurality of PTZ cameras may be configured to send one or more instructions to a second one of the plurality of PTZ video cameras via a peer-to-peer network to adjust a pan, tilt and/or zoom settings of the second one of the plurality of PTZ video cameras to capture the designated region of the monitored space in the FOV of the second one of the plurality of PTZ video cameras.

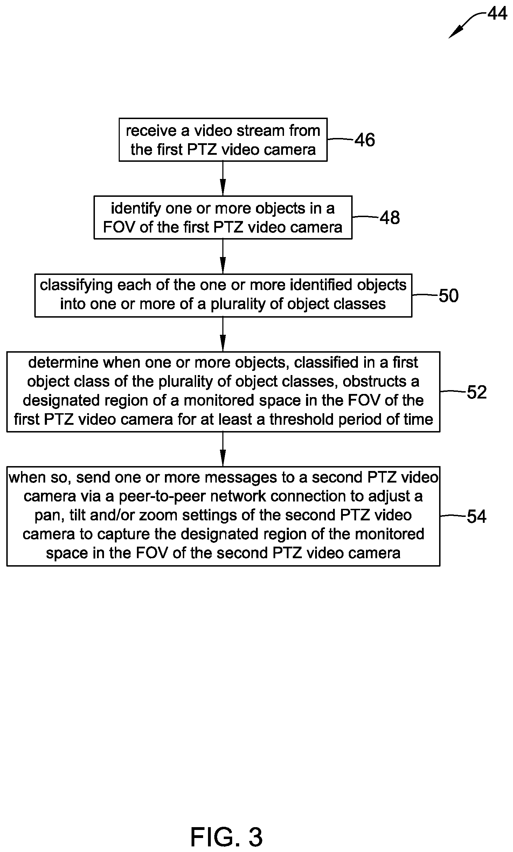

Figure 3 is a flow diagram showing an illustrative series of steps 44 that may be carried out by one or more processors of a first PTZ video camera (such as the PTZ video camera 12a) when executing executable instructions. The executable instructions may cause the one or more processors of the first PTZ video camera to receive a video stream from the first PTZ video camera, as indicated at block 46. The executable instructions may cause the one or more processors of the first PTZ video camera to identify one or more objects in a Field Of View (FOV) of the first PTZ video camera, as indicated at block 48. In some instances, identifying one or more objects in the FOV of the first PTZ video camera may include comparing one or more frames of the first video stream with a background reference frame associated with the first PTZ video camera to reveal the one or more objects. The executable instructions may cause the one or more processors of the first PTZ video camera to classify each of the one or more identified objects into one or more of a plurality of object classes, as indicated at block 50. As an example, the plurality of object classes may include one or more of an object size class and an object type class.

The executable instructions may cause the one or more processors of the first PTZ video camera to determine when one or more objects, classified in a first object class of the plurality of object classes, obstructs a designated region of a monitored space in the FOV of the first PTZ video camera for at least a threshold period of time, as indicated at block 52. When so determined, the executable instructions may cause the one or more processors of the first PTZ video camera to send one or more messages to a second PTZ video camera via a peer-to-peer network connection to adjust a pan, tilt and/or zoom settings of the second PTZ video camera to capture the designated region of the monitored space in the FOV of the second PTZ video camera, as indicated at block 54. In some instances, the designated region of the monitored space may be a predefined critical region defined during commissioning (e.g. a casino table).

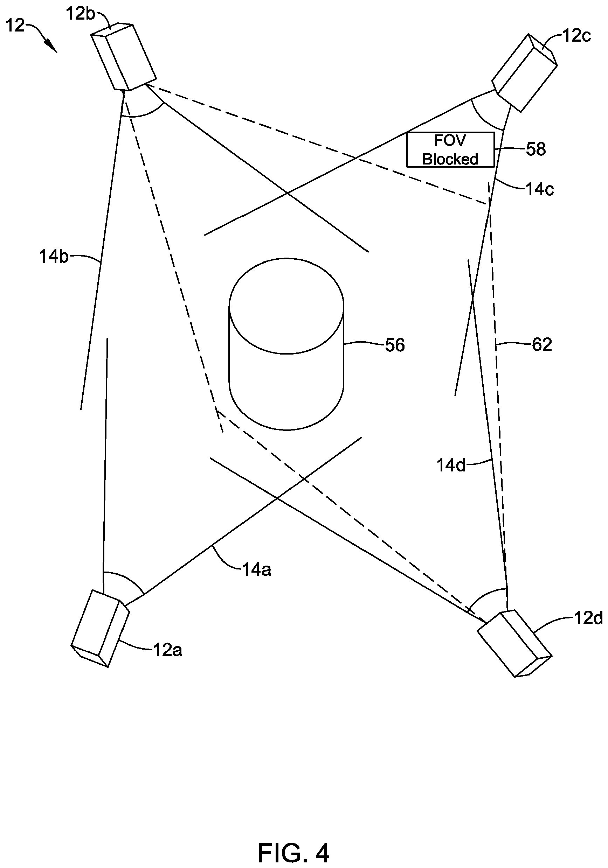

Figure 4 is a schematic illustration showing how one or more PTZ cameras 12 may compensate for a partially or completely blocked FOV 14 of a PTZ camera 12. A total of four PTZ video cameras 12 are shown, labeled as 12a, 12b, 12c and 12d. Each of the PTZ video cameras 12 have a FOV 14, individually labeled as 14a, 14b, 14c and 14d, and shown in solid line. The FOVs 14 may be considered as the original FOV 14 for each of the PTZ video cameras 12, as configured. A barrel 56 represents a designated region of a monitored space, and is of interest. As shown, the original FOV 14 of each of the PTZ video cameras 12 includes the barrel 56.

As an example, lets say that the FOV 14c of the PTZ video camera 12c is blocked by a blocking element 58, meaning that the PTZ video camera 12c no longer includes the barrel 56 in its FOV 14c. In response, the PTZ video cameras 12 can communicate with each other such that one or more of the other PTZ video cameras 12 can adjust their FOV 14 in order to compensate for the PTZ video camera 12c having its FOV 14c at least partially blocked. As can be seen, the video camera 12b has adjusted its FOV 14b, such as by adjusting its pan and/or its tilt, and now has a revised FOV 60 as indicated by the dashed lines. The revised FOV 60 covers more of the ground in front of the barrel 56, partially compensating for the loss of what the PTZ video camera 12c can see. The PTZ video camera 12d has also adjusted its FOV 14d, such as by adjusting its pan and/or its tilt, and now has a revised FOV 62 as indicated by the dashed lines. The revised FOV 62 covers more of the space in front of the barrel 56, partially compensating for the loss of what the PTZ video camera 12c can see.

A number of parameters may be configured or set during initial calibration of each of the PTZ video cameras 12. As an example, each PTZ video camera 12 may be used during calibration to capture 360 degree images. From there, an operator or user determines and marks the critical FOV for each of the PTZ video cameras 12. An operator or user configures object sizes. In some instances, the operator or user may configure the threshold for blockage time. As an example, a transient blockage, say less than a minute, may be ignored, while longer blockages may be viewed as critical.

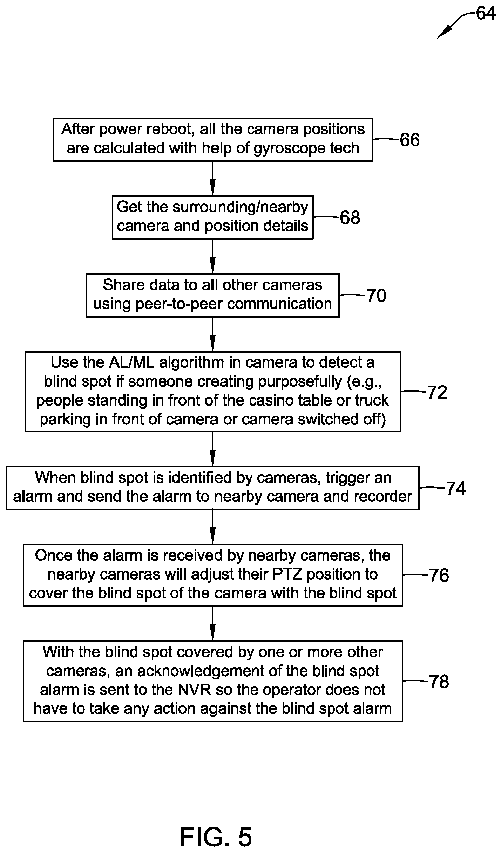

Figure 5 is a flow diagram showing an illustrative method 64 of operating the illustrative video monitoring system 10. When powered up, each of the PTZ video cameras calculate their current camera position, as indicated at block 66. Each of the PTZ video cameras determine or otherwise receive relevant information from neighboring PTZ video cameras, as indicated at block 68. This information is shared, as indicated at block 70. Artificial intelligence is used to detect blind spots, as indicated at block 72. Detected blind spots will generate an alarm and notify nearby PTZ video cameras, as indicated at block 74. Nearby PTZ video cameras will adjust their pan, tilt and/or zoom setting to compensate, as indicated at block 76. The monitoring station may be notified of the changes, as indicated at block 78. In some cases, after the detected blind spot is being captured by one or more of the other PTZ video cameras, the system may automatically acknowledge the blind spot alarm so that the operator does not need to take any action.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. The disclosure's scope is, of course, defined in the language in which the appended claims are expressed.

## Claims

1. A method for monitoring activities in a monitored space using a plurality of Pan/Tilt/Zoom, PTZ, video cameras (12) each having a Field Of View, FOV (14), the method comprising:
receiving a first video stream from a first one of the plurality of PTZ video cameras (12);
identifying one or more objects in the FOV (14) of the first one of the plurality of PTZ video cameras (12);
classifying each of the one or more identified objects into one or more of a plurality of object classes; and
determining when one or more objects, classified in a first object class of the plurality of object classes, obstructs a designated region of the monitored space in the FOV (14) of the first one of the plurality of PTZ video cameras (12) for at least a threshold period of time, wherein the designated region of the monitored space is a predefined critical region defined during commissioning, **characterized in that** when so:
causing a second one of the plurality of Pan/Tilt/Zoom, PTZ, video cameras (12) to adjust a pan, tilt and/or zoom settings of the second one of the plurality of Pan/Tilt/Zoom, PTZ, video cameras (12) to capture the designated region of the monitored space in the FOV (14) of the second one of the plurality of Pan/Tilt/Zoom, PTZ, video cameras (12).

2. The method of claim 1, wherein identifying one or more objects in the FOV (14) of the first one of the plurality of PTZ video cameras (12) includes comparing one or more frames of the first video stream with a background reference frame associated with the first one of the plurality of PTZ video cameras (12).

3. The method of claim 1, wherein classifying each of the one or more identified objects into one or more of a plurality of object classes includes classifying each of the one or more identified objects into one or more of a plurality of object classes using artificial intelligence, AI.

4. The method of claim 1, comprising sending one or more instructions from the first one of the plurality of Pan/Tilt/Zoom, PTZ, video cameras (12) to the second one of the plurality of Pan/Tilt/Zoom, PTZ, video cameras (12), wherein the one or more instructions cause the second one of the plurality of Pan/Tilt/Zoom, PTZ, video cameras (12) to adjust a pan, tilt and/or zoom settings of the second one of the plurality of Pan/Tilt/Zoom, PTZ, video cameras (12) to capture the designated region of the monitored space in the FOV (14) of the second one of the plurality of Pan/Tilt/Zoom, PTZ, video cameras (12).

5. The method of claim 4, wherein the one or more instructions are sent from the first one of the plurality of Pan/Tilt/Zoom, PTZ, video cameras (12) to the second one of the plurality of Pan/Tilt/Zoom, PTZ, video cameras (12) via a peer-to-peer network.

6. The method of claim 1, comprising:
verifying that the FOV (14) of the second one of the plurality of Pan/Tilt/Zoom, PTZ, video cameras (12) is not obstructed from viewing the designated region of the monitored space before causing the second one of the plurality of Pan/Tilt/Zoom, PTZ, video cameras (12) to adjust a pan, tilt and/or zoom settings of the second one of the plurality of Pan/Tilt/Zoom, PTZ, video cameras (12) to capture the designated region of the monitored space in the FOV (14) of the second one of the plurality of Pan/Tilt/Zoom, PTZ, video cameras (12).

7. The method of claim 1, wherein the plurality of object classes include one or more of an object size class and an object type class.

8. The method of claim 1, comprising:
storing one or more shared reference points that correspond to common physical locations in the monitored space in two or more of the plurality of Pan/Tilt/Zoom, PTZ, video cameras (12), wherein the designated region of the monitored space is identified relative to the one or more shared reference points.

9. The method of claim 8, comprising:
storing in the second one of the plurality of Pan/Tilt/Zoom, PTZ, video cameras (12) calibration data that relates one or more of the pan, tilt and/or zoom settings of the second one of the plurality of Pan/Tilt/Zoom, PTZ, video cameras (12) to the one or more shared reference points; and
adjusting the pan, tilt and/or zoom setting of the second one of the plurality of Pan/Tilt/Zoom, PTZ, video cameras (12) to capture the designated region of the monitored space in the FOV (14) of the second one of the plurality of Pan/Tilt/Zoom, PTZ, video cameras (12) based at least in part on the one or more shared reference points and calibration data.

10. A video monitoring system (10) for monitoring activities in a monitored space, comprising:
a plurality of Pan/Tilt/Zoom, PTZ, video cameras (12) each having a Field Of View, FOV (14), each of the plurality of Pan/Tilt/Zoom, PTZ, video cameras (12) operatively coupled via a peer-to-peer network;
a first one of the plurality of PTZ video cameras (12) is configured to:
receive a first video stream from the first one of the plurality of PTZ video cameras (12);
identify one or more objects in the FOV (14) of the first one of the plurality of PTZ video cameras (12);
classify each of the one or more identified objects into one or more of a plurality of object classes; and
determine when one or more objects, classified in a first object class of the plurality of object classes, obstructs a designated region of the monitored space in the FOV (14) of the first one of the plurality of PTZ video cameras (12) for at least a threshold period of time, wherein the designated region of the monitored space is a predefined critical region defined during commissioning, **characterized in that** when so, send one or more messages to a second one of the plurality of Pan/Tilt/Zoom, PTZ, video cameras (12) via the peer-to-peer network to adjust a pan, tilt and/or zoom settings of the second one of the plurality of Pan/Tilt/Zoom, PTZ, video cameras (12) to capture the designated region of the monitored space in the FOV (14) of the second one of the plurality of Pan/Tilt/Zoom, PTZ, video cameras (12).

11. The video monitoring system (10) of claim 10, wherein identifying one or more objects in the FOV (14) of the first one of the plurality of PTZ video cameras (12) includes comparing one or more frames of the first video stream with a background reference frame associated with the first one of the plurality of PTZ video cameras (12).

12. The video monitoring system (10) of claim 10, wherein classifying each of the one or more identified objects into one or more of a plurality of object classes includes classifying each of the one or more identified objects into one or more of a plurality of object classes using artificial intelligence, AI,.

13. The video monitoring system (10) of claim 10, wherein each of the plurality of object classes include one or more of an object size class and an object type class.

## Patentansprüche

1. Verfahren zum Überwachen von Aktivitäten in einem überwachten Raum unter Verwendung einer Vielzahl von Schwenk-/Neige-/Zoom-, PTZ-, Videokameras (12), wobei jede ein Sichtfeld, FOV (14), aufweist, das Verfahren umfassend:
Empfangen eines ersten Videostreams von einer ersten der Vielzahl von PTZ-Videokameras (12);
Identifizieren eines oder mehrerer Objekte in dem FOV (14) der ersten der Vielzahl von PTZ-Videokameras (12);
Klassifizieren jedes des einen oder der mehreren identifizierten Objekte in eine oder mehrere einer Vielzahl von Objektklassen; und
Bestimmen, wenn ein oder mehrere Objekte, die in einer ersten Objektklasse der Vielzahl von Objektklassen klassifiziert sind, eine benannte Region des überwachten Raums in dem FOV (14) der ersten der Vielzahl von PTZ-Videokameras (12) für mindestens einen Schwellenwert-Zeitraum blockiert, wobei die benannte Region des überwachten Raums eine vordefinierte kritische Region ist, die während einer Inbetriebnahme definiert wird, **gekennzeichnet dadurch, dass** wenn dies der Fall ist:
Veranlassen einer zweiten der Vielzahl von Schwenk-/Neige-/Zoom-, PTZ-, Videokameras (12), Schwenk-/Neige- und/oder Zoom-Einstellungen der zweiten der Vielzahl von Schwenk-/Neige-/Zoom-, PTZ-, Videokameras (12) dazu anzupassen, die benannte Region des überwachten Raums in dem FOV (14) der zweiten der Vielzahl von Schwenk-/Neige-/Zoom-, PTZ-, Videokameras (12) zu erfassen.

2. Verfahren nach Anspruch 1, wobei das Identifizieren eines oder mehrerer Objekte in dem FOV (14) der ersten der Vielzahl von PTZ-Videokameras (12) das Vergleichen eines oder mehrerer Frames des ersten Videostreams mit einem Hintergrundreferenz-Frame, das der ersten der Vielzahl von PTZ-Videokameras (12) zugehörig ist, beinhaltet.

3. Verfahren nach Anspruch 1, wobei das Klassifizieren jedes des einen oder der mehreren identifizierten Objekte in eine oder mehrere einer Vielzahl von Objektklassen das Klassifizieren jedes des einen oder der mehreren identifizierten Objekte in eine oder mehrere einer Vielzahl von Objektklassen unter Verwendung von künstlicher Intelligenz, KI, beinhaltet.

4. Verfahren nach Anspruch 1, umfassend Senden einer oder mehrerer Anweisungen von der ersten der Vielzahl von Schwenk-/Neige-/Zoom-, PTZ-, Videokameras (12) an die zweite der Vielzahl von Schwenk-/Neige-/Zoom-, PTZ-, Videokameras (12), wobei die eine oder die mehreren Anweisungen die zweite der Vielzahl von Schwenk-/Neige-/Zoom-, PTZ-, Videokameras (12) veranlassen, Schwenk-/Neige- und/oder Zoom-Einstellungen der zweiten der Vielzahl von Schwenk-/Neige-/Zoom-, PTZ-, Videokameras (12) dazu anzupassen, die benannte Region des überwachten Raums in dem FOV (14) der zweiten der Vielzahl von Schwenk-/Neige-/Zoom-, PTZ-, Videokameras (12) zu erfassen.

5. Verfahren nach Anspruch 4, wobei die eine oder die mehreren Anweisungen von der ersten der Vielzahl von Schwenk-/Neige-/Zoom-, PTZ-, Videokameras (12) über ein Peer-to-Peer-Netzwerk an die zweite der Vielzahl von Schwenk-/Neige-/Zoom-, PTZ-, Videokameras (12) gesendet werden.

6. Verfahren nach Anspruch 1, umfassend:
Überprüfen, dass das FOV (14) der zweiten der Vielzahl von Schwenk-/Neige-/Zoom-, PTZ-, Videokameras (12) nicht für das Betrachten der benannten Region des überwachten Raums blockiert ist, vor dem Veranlassen der zweiten der Vielzahl von Schwenk-/Neige-/Zoom-, PTZ-, Videokameras (12), Schwenk-/Neige- und/oder Zoom-Einstellungen der zweiten der Vielzahl von Schwenk-/Neige-/Zoom-, PTZ-, Videokameras (12) dazu anzupassen, die benannte Region des überwachten Raums in dem FOV (14) der zweiten der Vielzahl von Schwenk-/Neige-/Zoom-, PTZ-, Videokameras (12) zu erfassen.

7. Verfahren nach Anspruch 1, wobei die Vielzahl von Objektklassen eine oder mehrere von einer Objektgrößenklasse und einer Objekttypklasse beinhaltet.

8. Verfahren nach Anspruch 1, umfassend:
Speichern eines oder mehrerer geteilter Referenzpunkte, die gemeinsamen physischen Orten in dem überwachten Raum in zwei oder mehreren der Vielzahl von Schwenk-/Neige-/Zoom-, PTZ-, Videokameras (12) entsprechen, wobei die benannte Region des überwachten Raums relativ zu dem einen oder den mehreren geteilten Referenzpunkten identifiziert wird.

9. Verfahren nach Anspruch 8, umfassend:
Speichern in der zweiten der Vielzahl von Schwenk-/Neige-/Zoom-, PTZ-, Videokameras (12) von Kalibrierungsdaten, die eine oder mehrere der Schwenk-/Neige-und/oder Zoom-Einstellungen der zweiten der Vielzahl von Schwenk-/Neige-/Zoom-, PTZ-, Videokameras (12) in Bezug zu dem einen oder den mehreren Referenzpunkten setzen; und
Anpassen der Schwenk-/Neige- und/oder Zoom-Einstellung der zweiten der Vielzahl von Schwenk-/Neige-/Zoom-, PTZ-, Videokameras (12), um die benannte Region des überwachten Raums in dem FOV (14) der zweiten der Vielzahl von Schwenk-/Neige-/Zoom-, PTZ-, Videokameras (12) zu erfassen, mindestens teilweise auf Basis des einen oder der mehreren geteilten Referenzpunkte und der Kalibrierungsdaten.

10. Videoüberwachungssystem (10) zum Überwachen von Aktivitäten in einem überwachten Raum, umfassend:
eine Vielzahl von Schwenk-/Neige-/Zoom-, PTZ-, Videokameras (12), wobei jede ein Sichtfeld, FOV (14) aufweist, wobei jede der Vielzahl von Schwenk-/Neige-/Zoom-, PTZ-, Videokameras (12) betriebsfähig mit einem Peer-to-Peer-Netzwerk gekoppelt ist;
wobei eine erste der Vielzahl von PTZ-Videokameras (12) dazu konfiguriert ist:
einen ersten Videostream von der ersten der Vielzahl von PTZ-Videokameras (12) zu empfangen;
ein oder mehrere Objekte in dem FOV (14) der ersten der Vielzahl von PTZ-Videokameras (12) zu identifizieren;
jedes des einen oder der mehreren identifizierten Objekte in eine oder mehrere einer Vielzahl von Objektklassen zu klassifizieren; und
zu bestimmen, wenn eines oder mehrere Objekte, die in einer ersten Objektklasse der Vielzahl von Objektklassen klassifiziert sind, eine benannte Region des überwachten Raums in dem FOV (14) der ersten der Vielzahl von PTZ-Videokameras (12) für mindestens einen Schwellenwert-Zeitraum blockiert, wobei die benannte Region des überwachten Raums eine vordefinierte kritische Region ist, die während einer Inbetriebnahme definiert wird, **gekennzeichnet dadurch, dass** wenn dies der Fall ist:
über das Peer-to-Peer-Netzwerk eine oder mehrere Nachrichten an eine zweite der Vielzahl von Schwenk-/Neige-/Zoom-, PTZ-, Videokameras (12) zu senden, Schwenk-/Neige- und/oder Zoom-Einstellungen der zweiten der Vielzahl von Schwenk-/Neige-/Zoom-, PTZ-, Videokameras (12) dazu anzupassen, die benannte Region des überwachten Raums in dem FOV (14) der zweiten der Vielzahl von Schwenk-/Neige-/Zoom-, PTZ-, Videokameras (12) zu erfassen.

11. Videoüberwachungssystem (10) nach Anspruch 10, wobei das Identifizieren eines oder mehrerer Objekte in dem FOV (14) der ersten der Vielzahl von PTZ-Videokameras (12) das Vergleichen eines oder mehrerer Frames des ersten Videostreams mit einem Hintergrundreferenz-Frame, das der ersten der Vielzahl von PTZ-Videokameras (12) zugehörig ist, beinhaltet.

12. Videoüberwachungssystem (10) nach Anspruch 10, wobei das Klassifizieren jedes des einen oder der mehreren identifizierten Objekte in eine oder mehrere einer Vielzahl von Objektklassen das Klassifizieren jedes des einen oder der mehreren identifizierten Objekte in eine oder mehrere einer Vielzahl von Objektklassen unter Verwendung von künstlicher Intelligenz, KI, beinhaltet.

13. Videoüberwachungssystem (10) nach Anspruch 10, wobei jede der Vielzahl von Objektklassen eine oder mehrere von einer Objektgrößenklasse und einer Objekttypklasse beinhaltet.

## Revendications

1. Procédé de surveillance d'activités dans un espace surveillé au moyen d'une pluralité de caméras vidéo Panoramique/Inclinaison/Zoom, PTZ (12), chacune ayant un champ de vision, FOV (14), le procédé comprenant :
la réception d'un premier flux vidéo provenant d'une première caméra parmi la pluralité de caméras vidéo PTZ (12) ;
l'identification d'un ou plusieurs objets dans le FOV (14) de la première caméra parmi la pluralité de caméras vidéo PTZ (12) ;
la classification de chacun desdits un ou plusieurs objets identifiés dans une ou plusieurs classes d'objets parmi une pluralité de classes d'objets ; et
la détermination quand un ou plusieurs objets, classés dans une première classe d'objets de la pluralité de classes d'objets, obstruent une région désignée de l'espace surveillé dans le FOV (14) de la première caméra parmi la pluralité de caméras vidéo PTZ (12) pendant au moins une durée seuil, dans laquelle la région désignée de l'espace surveillé est une région critique prédéfinie définie lors de la mise en service, **caractérisé en ce que**, dans ce cas :
le fait d'amener une deuxième caméra parmi la pluralité de caméras vidéo Panoramique/Inclinaison/Zoom, PTZ (12) à ajuster des paramètres de panoramique, d'inclinaison et/ou de zoom de la deuxième caméra parmi la pluralité de caméras vidéo Panoramique/Inclinaison/Zoom, PTZ (12) afin de capturer la région désignée de l'espace surveillé dans le FOV (14) de la deuxième caméra parmi la pluralité de caméras vidéo Panoramique/Inclinaison/Zoom, PTZ (12).

2. Procédé de la revendication 1, dans lequel l'identification d'un ou plusieurs objets dans le FOV (14) de la première caméra parmi la pluralité de caméras vidéo PTZ (12) inclut la comparaison d'une ou plusieurs images du premier flux vidéo avec une image de référence d'arrière-plan associée à la première caméra parmi la pluralité de caméras vidéo PTZ (12).

3. Procédé de la revendication 1, dans lequel la classification de chacun desdits un ou plusieurs objets identifiés dans une ou plusieurs classes d'objets parmi une pluralité de classes d'objets inclut la classification de chacun desdits un ou plusieurs objets identifiés dans une ou plusieurs classes d'objets parmi une pluralité de classes d'objets au moyen d'une intelligence artificielle, IA.

4. Procédé de la revendication 1, comprenant l'envoi d'une ou plusieurs instructions depuis la première caméra parmi la pluralité de caméras vidéo Panoramique/Inclinaison/Zoom, PTZ (12) vers la deuxième caméra parmi la pluralité de caméras vidéo Panoramique/Inclinaison/Zoom, PTZ (12), dans lequel lesdites une ou plusieurs instructions amènent la deuxième caméra parmi la pluralité de caméras vidéo Panoramique/Inclinaison/Zoom, PTZ (12) à ajuster des paramètres de panoramique, d'inclinaison et/ou de zoom de la deuxième caméra parmi la pluralité de caméras vidéo Panoramique/Inclinaison/Zoom, PTZ (12) afin de capturer la région désignée de l'espace surveillé dans le FOV (14) de la deuxième caméra parmi la pluralité de caméras vidéo Panoramique/Inclinaison/Zoom, PTZ (12).

5. Procédé de la revendication 4, dans lequel lesdites une ou plusieurs instructions sont envoyées depuis la première caméra parmi la pluralité de caméras vidéo Panoramique/Inclinaison/Zoom, PTZ (12) vers la deuxième caméra parmi la pluralité de caméras vidéo Panoramique/Inclinaison/Zoom, PTZ (12) via un réseau pair-à-pair.

6. Procédé de la revendication 1, comprenant :
la vérification que le FOV (14) de la deuxième caméra parmi la pluralité de caméras vidéo Panoramique/Inclinaison/Zoom, PTZ (12) n'est pas obstrué pour visualiser la région désignée de l'espace surveillé avant d'amener la deuxième caméra parmi la pluralité de caméras vidéo Panoramique/Inclinaison/Zoom, PTZ (12) à ajuster des paramètres de panoramique, d'inclinaison et/ou de zoom de la deuxième caméra parmi la pluralité de caméras vidéo Panoramique/Inclinaison/Zoom, PTZ (12) afin de capturer la région désignée de l'espace surveillé dans le FOV (14) de la deuxième caméra parmi la pluralité de caméras vidéo Panoramique/Inclinaison/Zoom, PTZ (12).

7. Procédé de la revendication 1, dans lequel la pluralité de classes d'objets inclut une ou plusieurs parmi une classe de taille d'objet et une classe de type d'objet.

8. Procédé de la revendication 1, comprenant :
le stockage d'un ou plusieurs points de référence partagés qui correspondent à des emplacements physiques communs dans l'espace surveillé dans deux ou plusieurs caméras parmi la pluralité de caméras vidéo Panoramique/Inclinaison/Zoom, PTZ (12), dans lequel la région désignée de l'espace surveillé est identifiée par rapport auxdits un ou plusieurs points de référence partagés.

9. Procédé de la revendication 8, comprenant :
le stockage dans la deuxième caméra parmi la pluralité de caméras vidéo Panoramique/Inclinaison/Zoom, PTZ (12) des données d'étalonnage qui relient un ou plusieurs des paramètres de panoramique, d'inclinaison et/ou de zoom de la deuxième caméra parmi la pluralité de caméras vidéo Panoramique/Inclinaison/Zoom, PTZ (12) auxdits un ou plusieurs points de référence partagés ; et
l'ajustement des paramètres de panoramique, d'inclinaison et/ou de zoom de la deuxième caméra parmi la pluralité de caméras vidéo Panoramique/Inclinaison/Zoom, PTZ (12) afin de capturer la région désignée de l'espace surveillé dans le FOV (14) de la deuxième caméra parmi la pluralité de caméras vidéo Panoramique/Inclinaison/Zoom, PTZ (12) sur la base, au moins en partie, desdits un ou plusieurs points de référence partagés et des données d'étalonnage.

10. Système de surveillance vidéo (10) pour la surveillance d'activités dans un espace surveillé, comprenant :
une pluralité de caméras vidéo Panoramique/Inclinaison/Zoom, PTZ (12), chacune ayant un champ de vision, FOV (14), chacune de la pluralité de caméras vidéo Panoramique/Inclinaison/Zoom, PTZ (12) étant couplée de manière opérationnelle via un réseau pair-à-pair ;
une première caméra parmi la pluralité de caméras vidéo PTZ (12) étant configurée pour :
recevoir un premier flux vidéo provenant de la première caméra parmi la pluralité de caméras vidéo PTZ (12) ;
identifier un ou plusieurs objets dans le FOV (14) de la première caméra parmi la pluralité de caméras vidéo PTZ (12) ;
classifier chacun desdits un ou plusieurs objets identifiés dans une ou plusieurs classes d'objets parmi une pluralité de classes d'objets ; et
déterminer quand un ou plusieurs objets, classés dans une première classe d'objets de la pluralité de classes d'objets, obstruent une région désignée de l'espace surveillé dans le FOV (14) de la première caméra parmi la pluralité de caméras vidéo PTZ (12) pendant au moins une durée seuil, dans lequel la région désignée de l'espace surveillé est une région critique prédéfinie définie lors de la mise en service, **caractérisé en ce que**,
dans ce cas, envoyer un ou plusieurs messages à une deuxième caméra parmi la pluralité de caméras vidéo Panoramique/Inclinaison/Zoom, PTZ (12) via le réseau pair-à-pair afin d'ajuster des paramètres de panoramique, d'inclinaison et/ou de zoom de la deuxième caméra parmi la pluralité de caméras vidéo Panoramique/Inclinaison/Zoom, PTZ (12) afin de capturer la région désignée de l'espace surveillé dans le FOV (14) de la deuxième caméra parmi la pluralité de caméras vidéo Panoramique/Inclinaison/Zoom, PTZ (12).

11. Système de surveillance vidéo (10) de la revendication 10, dans lequel l'identification d'un ou plusieurs objets dans le FOV (14) de la première caméra parmi la pluralité de caméras vidéo PTZ (12) inclut la comparaison d'une ou plusieurs images du premier flux vidéo avec une image de référence d'arrière-plan associée à la première caméra parmi la pluralité de caméras vidéo PTZ (12).

12. Système de surveillance vidéo (10) de la revendication 10, dans lequel la classification de chacun desdits un ou plusieurs objets identifiés dans une ou plusieurs classes d'objets parmi une pluralité de classes d'objets inclut la classification de chacun desdits un ou plusieurs objets identifiés dans une ou plusieurs classes d'objets parmi une pluralité de classes d'objets au moyen d'une intelligence artificielle, IA.

13. Système de surveillance vidéo (10) de la revendication 10, dans lequel chacune de la pluralité de classes d'objets inclut une ou plusieurs parmi une classe de taille d'objet et une classe de type d'objet.
